# EUROPÄISCHE PATENTSCHRIFT

(11) **EP 1 991 335 B1**
(45) Veröffentlichungstag und Bekanntmachung des Hinweises auf die Patenterteilung: **22.12.2010**
(21) Anmeldenummer: 07722798.1
(22) Anmeldetag: 12.02.2007
(51) Int. Cl.: B01D 35/30, B01F 3/00, B01F 5/00

(54) **STRAHLDISPERGATOR, FILTERBEFESTIGUNGSSYSTEM, DÜSENBEFESTIGUNGSSYSTEM**
JET DISPERSER, FILTER FASTENING SYSTEM, NOZZLE FASTENING SYSTEM
DISPERSEUR DE FAISCEAU, SYSTEME DE FIXATION DE FILTRE ET SYSTEME DE FIXATION D'AJUTAGE

(30) Priorität: 24.02.2006 DE 102006008688
(43) Veröffentlichungstag der Anmeldung: 19.11.2008
(73) Patentinhaber: Bayer Technology Services GmbH, 51368 Leverkusen (DE)
(72) Erfinder: ROSE, Reinhold, 51371 Leverkusen (DE); BEHREND, Olaf, 51069 Köln (DE); POGGEL, Martin, 50668 Köln (DE); OBENDORF, Lars, 42799 Leichlingen (DE)
(86) Internationale Anmeldenummer: PCT/EP2007/001166
(87) Internationale Veröffentlichungsnummer: WO 2007/098853

(56) Entgegenhaltungen:
- DE-A1- 4 037 665
- US-A- 2 132 854
- US-A- 4 555 337
- US-B1- 6 413 706

## Beschreibung

Die vorliegende Erfindung betrifft eine Vorrichtung zum Behandeln von unter hohem Druck geförderten Stoffgemischen mit einem einen Hochdruckraum umgebenden Mantel, mindestens einem Dichtmittel, um den Hochdruckraum gegenüber der Umgebung abzudichten und einem Einlass und einem Auslass, um das zu behandelnde Stoffgemisch dem Hochdruckraum zuzuführen bzw. aus dem Hochdruckraum abzuführen, wobei der Hochdruckraum über mindestens einen Deckel zur Montage bzw. Demontage von einem in dem Hochdruckraum angeordneten Bearbeitungsmodul wie zum Beispiel ein Düsen- oder Filtermodul verschlossen ist.

Eine Vorrichtung der oben genannten Art ist bekannt und beispielsweise in der DE 102 24 634 C2 beschrieben. Zur Befestigung und zum Abdichten des Hochdruckraumes sind in dieser Vorrichtung in regelmäßigen Winkelabständen achsparallel zur zentralen Achse der Vorrichtung acht Spannschrauben vorgesehen, die die endseitigen Deckel der Vorrichtung so gegeneinander verspannen, dass sie mit hoher Anpresskraft gegen die Randflächen des den Hochdruckraum umgebenden Mantels drücken. Um eine dauerhaft dichte, hohen Druckbelastungen sicher standhaltenden Abdichtungen zwischen dem Mantel und den Deckeln bereitstellen zu können, ist in dieser Vorrichtung eine metallische Abdichtung vorgesehen. Die abdichtende Wirkung wird durch eine plastische Verformung der metallischen Dichtelemente erreicht, die durch das Verspannen der Spannschrauben mit einem hohen Anzugsmoment erzielt wird. Um nun einen Düsen- oder Filterwechsel durchführen zu können, oder einen Filter reinigen zu können, muss die Vielzahl von Verschraubungen gelöst werden, was sehr zeitintensiv und aufwendig ist. Ferner ist es notwendig nach der Demontage und einer erneuten Montage die Schrauben gleichmäßig auf dem Umfang der Halterung anzuziehen. Werden die Schrauben nicht gleichmäßig angezogen, ist es möglich, dass die Düse bzw. der Filter asymmetrisch angepresst wird oder der Deckel nicht vollständig an dem Mantel anliegt. Die Folge sind Undichtigkeiten und höherer Verschleiß der Dichtflächen. Ferner sind durch die große Schraubenanzahl längere Rüstzeiten zu erwarten.

Durch die achsparallel auf dem Umfang verteilten Schrauben und den zentral sitzenden Düseneinsatz sind konstruktiv bedingte Absätze in der Halterung nicht zu vermeiden, wodurch es zu hohen Kerbwirkungen während des Betriebs kommen kann. Die exzentrisch sitzenden Schrauben bilden zudem ein Biegemoment zu der zentralen Achse der Vorrichtung aus, wodurch die Materialbelastung insbesondere bei einer häufig genutzten pulsierenden Fahrweise der Vorrichtung zu Materialermüdungen bzw. zu Schädigungen in den mit den durch das Biegemoment hervorgerufenen Kräften belasteten Bereichen führen können. Ferner muss in dieser Vorrichtung der Systemdruck von bis zu 1500 bar allein von den Spannschrauben aufgenommen werden, was ein entsprechend hohes Anzugsmoment sowie eine massive Bauform der Vorrichtung erfordert.

Die DE 197 00 810 A1 offenbart eine Vorrichtung zum Homogenisieren von fetthaltigen, flüssigen Naturprodukten, in der das in den Hochdruckraum eingesetzte Bearbeitungsmodul zwei oder mehrstufige Dispergiervorrichtungen aufweist. Auch hier erfolgt die Abdichtung bzw. die Verspannung des Deckels und des Mantels der Vorrichtung über entsprechende achsparallel angeordnete Schraubenverbindungen, so dass die oben aufgezeigten Probleme auch bei dieser Vorrichtung in gleicher Weise auftreten.

Die US 6,413,706 B1 offenbart eine Vorrichtung mit umfassend einen zylindrischen Mantel, der um eine Kammer verläuft, in welcher eine Dispergierdüse angebracht ist. Der Eintritt der Kammer ist mit einem Stopfen verschlossen, durch welchen die Zuleitung des Stoffgemisches erfolgt, wobei der Verschluss mittels Gewinde von innen axial im Mantel befestigt ist.

Die US 6,413,706 B1 offenbart nicht, dass der Stopfen einen einlassseitigen Abstich in Kontakt mit dem Hochdruckraum aufweist.

Die DE 40 37 665 A1 offenbart einen Druckkörper für einen Hochdruckhomogenisator, in welchem das Homogenisierventil für das Stoffgemisch koaxial im zylindrischen Mantel angebracht ist. Das Verschlussorgan weist Radialdichtungen zwischen Umgebung und Hochdruckraum auf, die in Abstichen Aufgenommen sind und der Hochdruckraum ist mittels axialem Gewinde verschlossen.

Die Radialdichtungen der DE 40 37 665 A1 stehen aber nicht in direktem Kontakt mit dem Hochdruckraum, so dass bei Druckbeaufschlagung keine selbstverstärkende Dichtwirkung eintreten kann.

Auch die US 4,555,337 A offenbart eine ähnliche Anordnung, wie die DE 40 37 665 A1, in der aber die Dichtmittel wiederum nicht in direktem Kontakt mit dem Hochdruckraum stehen, so dass auch hier keine selbstverstärkende Dichtwirkung eintreten kann.

Die US 2,132,854 A offenbart eine Vorrichtung zum Emulgieren von Stoffgemischen unter Druck. Auch die US 2,132,854 A offenbart keine Dichtmittel, die bei Druckbeaufschlagung an Dichtkraft gewinnen.

Es ist daher Aufgabe der vorliegenden Erfindung, eine Vorrichtung bereitzustellen, die eine einfache Montage und Demontage der Bearbeitungsmodule bei einer gleichzeitig leichteren Bauweise ermöglicht und die einen sicheren Betrieb im Hochdruckbereich bis zu 1600 bar gewährleistet.

Diese Aufgabe wird durch die Vorrichtung gemäß dem Anspruch 1 gelöst.

Die Erfindung basiert auf dem Grundgedanken, dass durch die erfindungsgemäße Ausgestaltung der Vorrichtung asymmetrische Belastungen, die beispielsweise durch ungleiche Anzugsmomente und durch Biegemomente in der Vorrichtung hervorgerufen werden können vermieden werden, so dass eine geringere Materialbelastung auch bei pulsierendem Pumpenbetrieb mit häufigen Lastwechseln erreicht wird. Das koaxial angeordnete Befestigungselement dient in dem erfindungsgemäßen Aufbau lediglich zur Positionierung der Bearbeitungsmodule und/oder der Dichtungselemente zueinander.

Durch die zylinderförmige Ausführung der erfindungsgemäßen Vorrichtung werden kerbwirkungsträchtige Bereiche vermieden, so dass das Material einem geringen Verschleiß und einer geringen Gefahr einer Materialermüdung ausgesetzt ist und damit einer geringeren Versagenswahrscheinlichkeit unterliegt.

Das Befestigungsmittel ist erfindungsgemäß axial mit dem Mantel verschraubt. Eine Arretierung des Befestigungsmittels in der Vorrichtung mittels Rastverbindungen oder Bolzenverbindungen ist jedoch ebenfalls denkbar.

Um das Befestigungsmittel gegen ein unbeabsichtigtes Lösen aus dem Mantel der Vorrichtung zu sichern, kann mindestens ein Befestigungselement beispielsweise ein Gewindestift vorgesehen sein. Auch hier kann als Alternative ein Rastmechanismus zwischen den Mantel und der Befestigungsmittel angeordnet sein.

Um auch Bearbeitungsmodule mit unterschiedlichen Anschlussgeometrien in dem Hochdruckraum aufnehmen zu können, sieht die Erfindung in einem weiteren Ausführungsbeispiel vor, ein frei durchströmbares Adapterstück zwischen dem Befestigungsmittel und dem Bearbeitungsmodul vorzusehen, dessen Abmessungen an die Geometrie des Bearbeitungsmoduls angepasst ist. Dadurch kann die Vorrichtung durch einfaches Austauschen des Adapterstückes vielseitig für diverse Bearbeitungsmodule mit unterschiedlichen Anschlussgeometrien eingesetzt werden.

Eine vorteilhafte Ausführungsform der Erfindung sieht vor, dass das Dichtmittel ein Doppelradialdichtungssystem ist, um den Hochdruckraum gegen ungewünschten Fluidaustritt zu sichern. Andere im Stand der Technik bekannte Dichtsysteme sind ebenfalls denkbar.

Das Befestigungsmittel weist einlassseitig mindestens einen Abstich auf. Das Dichtungssystem ist hierdurch so positionierbar, dass allein durch den Systemdruck, der bis zu 1600 bar betragen kann, die zur Abdichtung notwendige Flächenpressung auf das in den Abstich eingesetzte Dichtmittel aufgebracht wird, was gleichbedeutend mit einer Art selbstdichtenden System ist.

Zur Detektion von eventuell auftretenden Dichtungsleckagen beispielsweise durch Alterung bzw. Materialermüdung der Dichtelemente kann in einem Ausführungsbeispiel der vorliegenden Erfindung eine Leckagebohrung in dem Mantel vorgesehen sein, durch die eventuell aus dem Hochdruckraum austretendes Stoffgemisch aus der Vorrichtung herausgeführt und dadurch sichtbar gemacht wird und kontrolliert abgeführt werden kann.

Ein alternatives Ausführungsbeispiel sieht vor, dass das Bearbeitungsmodul mindestens einen Düsenkörper, insbesondere mindestens eine axial in dem Hochdruckraum ausgerichtete Strahldispergatordüseneinheit und/oder mindestens eine Strömungsteilereinheit und/oder mindestens eine Filtereinheit zur Reinigung des Stoffgemisches und/oder mindestens ein frei durchströmbares Bauteil umfasst, das/die insbesondere in Reihenschaltung in dem Hochdruckraum positionierbar ist/sind. Durch die Möglichkeit der flexiblen Zusammensetzungen des Bearbeitungsmoduls kann die erfindungsgemäße Vorrichtung für verschiedene Bearbeitungen eingesetzt werden. So ist es beispielsweise möglich, auf einfache Weise eine Reihenschaltung von Strahldispergatoren und Filtern in einem einzigen Bauteil zu realisieren.

Werden mehrere Einheiten hintereinander in Reihe geschaltet, ist es zweckmäßig, die Einheiten jeweils durch Dichtmittel voneinander zu trennen. So kann z.B. vor jeder Strömungsteilereinheit einlassseitig ein Dichtmittel wie z.B. ein Doppelradialdichtungssystem eingesetzt ist.

Eine aus strömungs- und fertigungstechnischen Aspekten besonders bevorzugte Ausführungsform der vorliegenden Erfindung sieht vor, dass auch das Bearbeitungsmodul koaxial zum Mantel bzw. zum Befestigungsmittel ausgerichtet ist.

Hinsichtlich weiterer vorteilhafter Ausgestaltungen und Weiterbildungen der Erfindung wird auf die Unteransprüche und die nachfolgende Beschreibung eines Ausführungsbeispiels anhand der beiliegenden Zeichnung verwiesen.

In der Zeichnung zeigt:
- Figur 1: eine Vorrichtung zur Beanspruchung von Stoffgemischen durch Hochdruckent- spannung beispielsweise zur Herstellung von Emulsionen oder zum Zellaufschluss biologischer Systeme;
- Figur 2: eine Vorrichtung mit einer Filtereinheit zur Reinigung von Stoffgemischen, insbe- sondere zum Schutz von Hochdruckdüsen vor Verstopfung;
- Figur 3: eine Vorrichtung mit einem Bearbeitungsmodul mit einer "in-Reihe-Anordnung" Einheiten zur Reinigung und Hochdruckentspannung von Stoffgemischen.

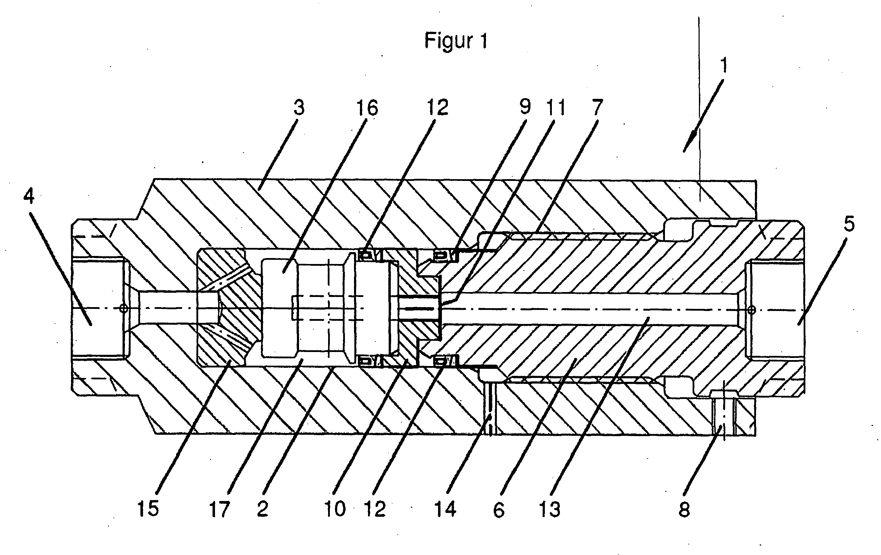

Die Figur 1 zeigt eine Vorrichtung 1 zum Behandeln von unter hohem Druck geförderten Stoffgemischen mit einem einen Hochdruckraum 2 umgebenden Mantel 3. Endseitig weist die Vorrichtung 1 jeweils einen Einlass 4 und einen Auslass 5 auf, um das zu behandelnde Stoffgemisch dem Hochdruckraum 2 zuzuführen bzw. aus dem Hochdruckraum 2 abzuführen. Ein Befestigungsmittel 6 ist zylindrisch ausgebildet und weist ein Außengewinde 7 auf, über das das Befestigungsmittel 6 auslassseitig mit einem Innengewinde des Mantels 3 verschraubt ist. Der Einlass 4 und der Auslass 5 sind so ausgelegt, dass sie in eine geeignete, nicht dargestellte Hochdruckverschraubung eingesetzt und so an einen Bearbeitungskreislauf angeschlossen werden können. Zur Sicherung des Befestigungsmittels 6 in dem Mantel 3 weist der Mantel 3 eine Aussparung 8 auf, in die ein Befestigungselement beispielsweise in der Form eines nicht dargestellten Gewindestiftes eingesetzt ist. Ein Adapterstück 10 ist einlassseitig in eine Vertiefung 11 des Befestigungsmittels 6 eingesetzt. Die Abdichtung des Hochdruckraums 2 erfolgt über ein Dichtmittel 12, welches in Strömungsrichtung vor dem Adapterstück 10 angeordnet ist. Eine weitere Dichtung 12 dichtet in diesem Ausführungsbeispiel den je nach Einbaubedingung ebenfalls unter hohem Druck stehenden Abströmraum 13 gegen Fluidaustritt ab.

Im Bereich des Abströmraumes ist in dem Mantel eine Leckagebohrung 14 vorgesehen, um Dichtungsleckagen auf schnelle und einfache Art erkennen zu können. Ein Bearbeitungsmodul ist in diesem Ausführungsbeispiel aus einem Strömungsteiler 15 und einem Düsenkörper 16 zusammengesetzt.

Zur Behandlung des Stoffgemisches strömt dieses unter hohem Druck über den Einlass 4 unter vernachlässigbarem Druckverlust durch den Strömungsteiler 15 in den Außenraum 17, welcher den Düsenkörper 16 umgibt. Anschließend strömt das Stoffgemisch durch in der Zeichnung nicht dargestellte Düsenbohrungen in dem Düsenkörper 16, wodurch eine Entspannung des Stoffgemisches erreicht wird. Das Stoffgemisch wird über den ebenfalls nicht dargestellten Innenraum des Düsenkörpers 16 und die Bohrungen durch das Adapterstück 10 in den in dem Befestigungsmittel 6 integrierten Auslass 5 abgeleitet.

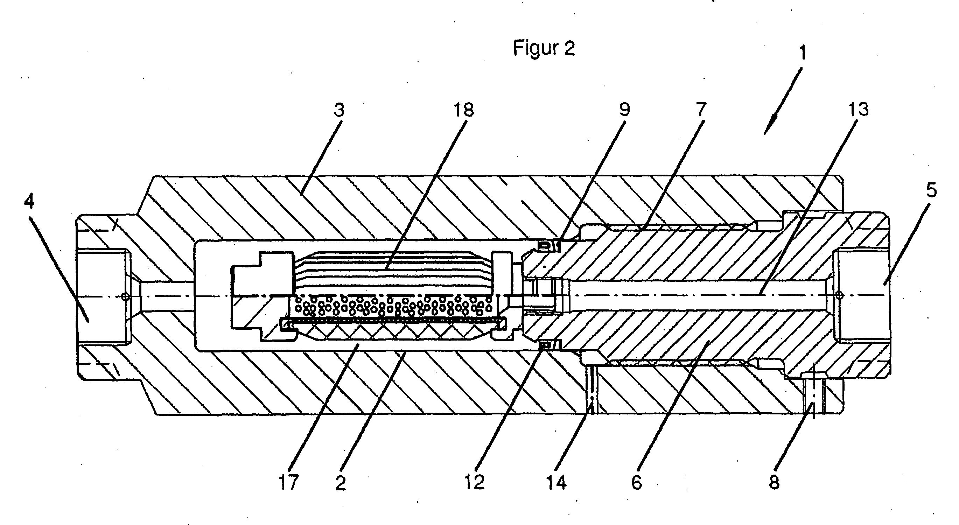

Die Figur 2 zeigt eine Vorrichtung 1 zur Reinigung von Stoffgemischen, insbesondere um Hochdruckdüsen vor einer Verunreinigung und einem Zusetzen zu schützen. Der prinzipielle Aufbau der Vorrichtung 1 gemäß der Figur 2 ist identisch mit dem der Vorrichtung 1 gemäß der Figur 1. Gleiche Bauteile werden daher mit gleichen Bezugsziffern versehen. Der Unterschied besteht lediglich in der Zusammensetzung des Bearbeitungsmodules in dem Hochdruckraum 2. Hier ist an Stelle des Strömungsteilers 15, des Düsenkörpers 16 und des Adapterstücks 10 lediglich eine Filtereinheit 18 zur Filterung und Reinigung des Stoffgemisches von eventuell in dem Stoffgemisch befindlichen Schmutzpartikeln vorgesehen.

Das Stoffgemisch strömt auch hier unter hohem Druck durch den Einlass 4 in den Außenraum 17 des Filterelementes 18. Während des Durchströmens des Filterelements 18 ist ebenfalls nur ein geringer Druckabfall in dem Stoffgemisch festzustellen.

Soll mittels der erfindungsgemäßen Vorrichtung 1 beispielsweise ein ein- oder mehrstufiger Aufschluss biologischer Zellen über in Reihe geschaltete Düsenkörpereinheiten realisiert werden, muss der zulaufende Stoffstrom nicht zwingend gefiltert werden. Der Filter 18 kann in diesem Fall aus der Vorrichtung 1 entnommen werden und die Position des Filters 18 beispielsweise durch ein frei durchströmbares Bauteil ausgefüllt.

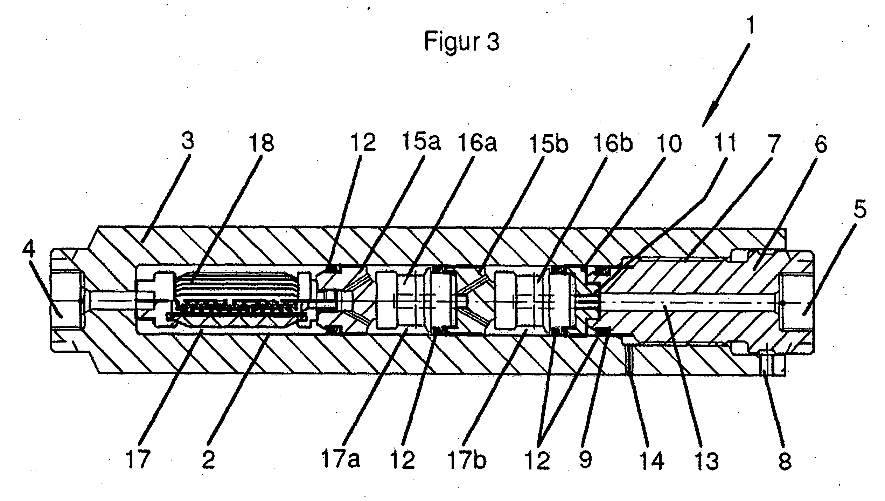

Die Figur 3 zeigt eine Vorrichtung 1 zur Reinigung und Hochdruckentspannung von Stoffgemischen mit einem Bearbeitungsmodul, dessen Einheiten in einer in-Reihe-Schaltung angeordnet sind.

Der Stoffstrom, beispielsweise ein Fluid, strömt unter hohem Druck durch den Einlass 4 in den Außenraum 17 um das Filterelement 18, wobei nur ein geringer Druckabfall beim Durchströmen des Filterelements 18 zu beobachten ist. Anschließend strömt das Fluid durch den Strömungsteiler 15a in den Außenraum 17a, um den ersten Düsenkörper 16a. Es erfolgt eine Entspannung während des Durchströmens der in diesem Körper 16a eingebrachten, nicht dargestellten Düsenbohrungen. Anschließend wird das Fluid durch den Innenraum des Düsenkörpers 16a abgeleitet und durch einen weiteren Strömungsteiler 15b in den Außenraum 17b des nächsten Düsenkörpers 16b weitergeleitet und anschließend über den nicht dargestellten Innenraum dieses Düsenkörpers 16b in den in dem Befestigungsmittel 6 angeordneten Auslass 5 weitergeleitet. Die durch die mehrfache Anordnung von Düsenkörpern 16a und 16b erfolgende mehrstufige Hochdruckentspannung dient beispielsweise zur Herstellung von Emulsionen oder kann für einen ein- oder mehrstufigen Zellaufschluss biologischer Systeme verwendet werden. Bei Zellaufschluss kann es jedoch in Abhängigkeit von der Konsistenz der Biomasse in einigen Fällen notwendig sein, an Stelle des Filters ein frei durchströmbares Bauteil in den Hochdruckraum 2 einzusetzen, welches die gleichen Abmessungen wie die substituierte Filtereinheit aufweist.

Zwischen den einzelnen Düsenkörpern 16a und 16b ist in jedem Ausführungsbeispiel an den Strömungsteilern 15a und 15b jeweils ein Dichtmittel 12 in der Form eines Doppelradialdichtungssystems vorgesehen, so dass jede einzelne Stufe für sich ein abgedichtetes geschlossenes System bildet und unerwünschte Kurzschlussströmungen des Stoffgemisches durch Umgehung eines Bearbeitungsmoduls so verhindert werden kann.

Durch die zylinderartige Konstruktion der Vorrichtung 1 bzw. des Befestigungselementes 6 und des Mantels 3 und die zentrale Anordnung des Befestigungsmittels 6 in dem Mantel 3 werden zum einen kerbwirkungsträchtige Bereiche vermieden, so dass das Material einem geringen Verschleiß ausgesetzt ist und damit einer geringeren Versagenswahrscheinlichkeit unterliegt. Zum anderen kann durch die Anordnung des Radialdichtungssystems in Strömungsrichtung des Stoffgemisches eine quasi selbstdichtende Vorrichtung erreicht werden.

Das Radialdichtungssystem ist so angeordnet, dass nicht das zentral sitzende Befestigungsmittel die notwendige Flächenpressung der Dichtmittel zur Abdichtung erzeugen muss, sondern der Systemdruck selber die notwendige Flächenpressung erzeugt, so dass ein Betrieb mit bis zu 1600 bar Systemdruck möglich ist. Das Befestigungsmittel dient somit lediglich zur Positionierung der Dichtflächen bzw. der verschiedenen Einheiten des Bearbeitungsmoduls zueinander. Dadurch dass keine stirnseitigen Dichtungssysteme verwendet werden, ist es auch nicht notwendig, eine entsprechende Vorspannung der Befestigungsmittel durch ein entsprechend hartes Anziehen der Verschraubungen zu erzeugen.

## Patentansprüche

1. Vorrichtung (1) zum Behandeln von unter hohem Druck geförderten Stoffgemischen mit einem einen Hochdruckraum (2) umgebenden Mantel (3), mindestens einem Dichtmittel (12), um den Hochdruckraum (2) gegenüber der Umgebung abzudichten, und einem Einlass (4) und einem Auslass (5), um das zu behandelnde Stoffgemisch dem Hochdruckraum (2) zuzuführen bzw. aus dem Hochdruckraum (2) abzuführen, wobei der Hochdruckraum (2) über mindestens einen Deckel zur Montage bzw. Demontage von einem in dem Hochdruckraum (2) angeordneten Bearbeitungsmodul verschlossen ist, **dadurch gekennzeichnet, dass** der Deckel ein zentrales Befestigungsmittel (6) aufweist, und der Auslass (5) in dem Deckel ausgebildet ist, sowie weiter das Befestigungsmittel (6) einlassseitig mindestens einen Abstich (9) im Kontakt mit dem Hochruckraum (2) aufweist, in die das Dichtmittel (12) eingesetzt ist und wobei der Mantel (3) und das Befestigungsmittel (6) zylindrisch ausgebildet sind und das Befestigungsmittel (6) innerhalb des Mantels (3) axial mit diesem verschraubt ist.

2. Vorrichtung (1) nach einem der vorhergehenden Ansprüche, **dadurch gekennzeichnet, dass** zur Sicherung des Befestigungsmittels (6) gegen unbeabsichtigtes Lösen aus den Mantel (3) mindestens ein Befestigungselement, insbesondere ein Gewindestift vorgesehen ist.

3. Vorrichtung (1) nach einem der vorhergehenden Ansprüche, **dadurch gekennzeichnet, dass** das Befestigungsmittel (6) mindestens eine Vertiefung (11) aufweist, in die ein Adapterstück (10) zur Aufnahme des Bearbeitungsmoduls einsetzbar ist.

4. Vorrichtung (1) nach einem der vorhergehenden Ansprüche, **dadurch gekennzeichnet, dass** sie als Dichtmittel (12) ein Doppelradialdichtungssystem aufweist, um den Hochdruckraum (2) gegen einen ungewünschten Austritt des zu behandelnden Stoffgemisches zu sichern.

5. Vorrichtung (1) nach einem der vorherigen Ansprüche, **dadurch gekennzeichnet, dass** zur Detektion von Dichtungsleckagen eine Leckagebohrung (14) in dem Mantel (3) vorgesehen ist.

6. Vorrichtung (1) nach einem der vorhergehenden Ansprüche, **dadurch gekennzeichnet, dass** das Bearbeitungsmodul mindestens eine Düsenkörpereinheit (16, 16a, 16b), insbesondere eine axial in dem Hochdruckraum ausgerichtete Strahldispergatordüseneinheit und/oder mindestens eine Strömungsteilereinheit (15, 15a, 15b) und/oder mindestens eine Filterelementeinheit (18) zur Reinigung des Stoffgemisches und/oder mindestens ein frei durchströmbares Bauteil umfasst, das/die insbesondere in Reihenschaltung in dem Hochdruckraum (2) positionierbar ist/sind.

7. Vorrichtung (1) nach einem der vorhergehenden Ansprüche, **dadurch gekennzeichnet, dass** das Bearbeitungsmodul koaxial zum Mantel (3) ausgerichtet ist.

## Claims

1. Device (1) for the treatment of substance mixtures conveyed under high pressure, with a casing (3) surrounding a high-pressure space (2), with at least one sealing means (12) in order to seal off the high-pressure space (2) with respect to the surroundings, and with an inlet (4) and an outlet (5) in order respectively to supply the substance mixture to be treated to the high-pressure space (2) and to discharge it from the high-pressure space (2), the high-pressure space (2) being closed, via at least one cover for mounting and demounting, by a processing module arranged in the high-pressure space (2), **characterized in that** the cover has a central fastening means (6), and the outlet (5) is formed in the cover, and also furthermore the fastening means (6) on the inlet side has at least one cutout (9) in contact with the high-pressure space (2), into which cutout the sealing means (12) is inserted and the casing (3) and the fastening means (6) being designed cylindrically and the fastening means (6) being screwed inside the casing (3) axially thereto.

2. Device (1) according to the preceding claim, **characterized in that** at least one fastening element, in particular a headless pin, is provided for securing the fastening means (6) against unintended release from the casing (3).

3. Device (1) according to one of the preceding claims, **characterized in that** the fastening means (6) has at least one depression (11), into which an adapter piece (10) for receiving the processing module can be inserted.

4. Device (1) according to one of the preceding claims, **characterized in that** it has, as sealing means (12), a double radial sealing system, in order to secure the high-pressure space (2) against undesirable outflow of the substance mixture to be treated.

5. Device (1) according to one of the preceding claims, **characterized in that** a leakage bore (14) is provided in the casing (3) for the detection of sealing leakages.

6. Device (1) according to one of the preceding claims, **characterized in that** the processing module comprises at least one nozzle body unit (16, 16a, 16b), in particular a jet disperser nozzle unit oriented axially in the high-pressure space and/or at least one flow divider unit (15, 15a, 15b) and/or at least one filter element unit (18) for purifying the substance mixture and/or at least one free-throughflow component which can be positioned, in particular, in series connection in the high-pressure space (2).

7. Device (1) according to one of the preceding claims, **characterized in that** the processing module is oriented coaxially with respect to the casing (3).

## Revendications

1. Dispositif (1) de traitement de mélanges de matières transportés sous haute pression, le dispositif présentant :
une enveloppe (3) qui entoure un espace (2) sous haute pression,
au moins un moyen d'étanchéité (12) qui assure l'étanchéité de l'espace (2) sous haute pression vis-à-vis de l'environnement et
une admission (4) et une sortie (5) qui permettent d'amener dans l'espace (2) sous haute pression ou de retirer de l'espace (2) sous haute pression le mélange de matière à traiter,
l'espace (2) sous haute pression étant fermé par au moins un couvercle qui permet le montage ou le démontage d'un module de traitement disposé dans l'espace (2) sous haute pression,
**caractérisé en ce que**
le couvercle présente un moyen central (6) de fixation et la sortie (5) est formée dans le couvercle,
**en ce que** le moyen de fixation (6) présente du côté de l'admission au moins un orifice de prélèvement (9) en contact avec l'espace (2) sous haute pression et dans lequel le moyen d'étanchéité (12) est inséré et
**en ce que** l'enveloppe (3) et le moyen de fixation (6) ont une forme cylindrique et le moyen de fixation (6) est vissé axialement à l'intérieur de l'enveloppe (3).

2. Dispositif (1) selon la revendication précédente, **caractérisé en ce qu'**au moins un élément de fixation, en particulier une tige filetée, est prévu pour empêcher que le moyen de fixation (6) se détache intempestivement hors de l'enveloppe (3).

3. Dispositif (1) selon l'une des revendications précédentes, **caractérisé en ce que** le moyen de fixation (6) présente au moins un creux (11) dans lequel une pièce d'adaptateur (10) qui reprend le module de traitement peut être insérée.

4. Dispositif (1) selon l'une des revendications précédentes, **caractérisé en ce que** comme moyen d'étanchéité (12), il présente un système à double joint radial d'étanchéité qui empêche que le mélange de matière à traiter sorte de manière indésirable de l'espace (2) sous haute pression.

5. Dispositif (1) selon l'une des revendications précédentes, **caractérisé en ce qu'**un alésage de fuite (14) est prévu dans l'enveloppe (3) pour détecter des fuites au joint d'étanchéité.

6. Dispositif (1) selon l'une des revendications précédentes, **caractérisé en ce que** le module de traitement comporte au moins une unité (16, 16a, 16b) à corps de tuyère, en particulier une unité à tuyère de dispersion en jet orienté axialement dans l'espace sous haute pression, et/ou au moins une unité (15, 15a, 15b) de division d'écoulement, et/ou au moins une unité (18) d'élément de filtre qui épure le mélange de matière et/ou au moins un composant qui peut être traversé librement, qui peuvent être positionnées en particulier en raccordement en série dans l'espace (2) sous haute pression.

7. Dispositif (1) selon l'une des revendications précédentes, **caractérisé en ce que** le module de traitement est orienté coaxialement par rapport à l'enveloppe (3).
